# EUROPÄISCHE PATENTSCHRIFT

(11) **EP 1 481 842 B1**
(45) Veröffentlichungstag und Bekanntmachung des Hinweises auf die Patenterteilung: **28.05.2008**
(21) Anmeldenummer: 03011160.3
(22) Anmeldetag: 26.05.2003
(51) Int. Cl.: B60P 1/48, B60P 1/64

(54) **Transportfahrzeug mit Ladebrücke und Schwenk-Hebearmen, dazugehörige Ladebrückeneinheit, Verfahren zum Beladen und Transportsystem zur Durchführung des Verfahrens**
Transport vehicle with loading platform and pivotable and liftable arms, including loading platform unit, method for loading and transportation system for carrying out of the method
Véhicule de transport avec plate-forme de chargement, y compris unité de plate-forme de chargement, méthode de chargement et de transportation et système de transportation pour mise en oeuvre de la méthode

(43) Veröffentlichungstag der Anmeldung: 01.12.2004
(73) Patentinhaber: Ernst Wirz AG, CH-8707 Uetikon am See (CH)
(72) Erfinder: Wirz, Herbert, 8707 Uetikon am See (CH)
(74) Vertreter: Blum, Rudolf Emil

(56) Entgegenhaltungen:
- EP-A- 0 542 601
- EP-A- 1 288 066
- WO-A-89/06611
- DE-A- 2 350 305
- DE-A- 3 234 198
- DE-A- 4 017 370
- DE-A- 4 430 573
- DE-U- 8 310 195
- DE-U- 20 007 538
- GB-A- 1 426 863
- GB-A- 2 334 709
- US-A- 4 613 274
- US-A- 5 601 393

## Beschreibung

Die vorliegende Erfindung betrifft ein Transportfahrzeug, eine Ladebrückeneinheit zur Bildung eines solchen Transportfahrzeugs sowie ein Transportsystem mit einem solchen Transportfahrzeug oder einer solchen Ladebrückeneinheit gemäss den Oberbegriffen der unabhängigen Patentansprüche.

Für das Sammeln von Abfällen und Wertstoffen über einen längeren Zeitraum an einem bestimmten Ort und den anschliessenden Abtransport derselben hat es sich allgemein durchgesetzt, Wechselbehälter zu verwenden, welche vor Ort als Sammelbehälter aufgestellt werden und nach ihrer Befüllung als Transportbehälter für den Abtransport dienen, wobei diese sodann bei Bedarf durch einen leeren Wechselbehälter ersetzt werden. Auf diese Weise lassen sich mit nur einem Transportfahrzeug eine Vielzahl von Sammelstellen bedienen und verfügbar halten.

Auf Grund bestimmter Vorteile wie geringer Platzbedarf, Abstellbarkeit auf praktisch allen Untergründen und Möglichkeit des Ineinanderstapelns leerer Behälter kommen heute mehrheitlich Absetzbehältersysteme zum Einsatz, bei denen der Behälter mittels zweier jeweils seitlich am Transportfahrzeug angebrachter Schwenk-Hebearme auf das Fahrzeug aufgesetzt oder vom Fahrzeug abgesetzt wird. Diese Transportfahrzeuge sind jedoch Spezialfahrzeuge, die sich ausschliesslich für den Transport von Absetzbehältern eignen, nicht jedoch für den Transport von losen Stück- oder Schüttgütern, was dazu geführt hat, dass die Verwendung solcher Absetzbehältersysteme heute fast ausschliesslich auf Spezialunternehmen der Entsorgungsbranche beschränkt ist und zudem eine hohe Anzahl an Leerfahrten in Kauf genommen werden muss. Zur Verhinderung dieser Nachteile wurden bereits mehrere universeller nutzbare Fahrzeuge vorgeschlagen, welche sowohl über eine an mindestens drei Seiten von Begrenzungswänden begrenzte Ladefläche verfügen als auch über im Bereich der Fahrzeuglängsseiten angeordnete Schwenk-Hebe-Arme.

So offenbart beispielsweise WO 89/06611 ein Transportfahrzeug mit einer abnehmbaren Ladebrücke mit einer durch Begrenzungswände begrenzten Ladefläche, wobei seitlich an der Ladebrücke zwei Schwenk-Hebearme angebaut sind, mit denen Absetzmulden auf- und abgeladen werden können. Das Fahrzeug eignet sich sowohl für den Transport von Schüttgütern als auch von Absetzmulden, wobei jedoch ein Abladen durch Abkippen der Ladung nicht möglich ist.

DE 40 17 370 zeigt einen Fahrzeuganhänger mit einer festen Ladebrücke, an der seitlich zwei Schwenk-Hebearme zum Auf- bzw. Abladen von Wechselmulden angeordnet sind. Die Ladefläche der Ladebrücke ist an der Vorderseite und an den Längsseiten von Bordwänden begrenzt, so dass auf ihr auch lose Schüttgüter wie z.B. Sand oder Kies transportiert werden können. Ein Abladen von Schüttgütern durch Abkippen derselben ist hier jedoch nur möglich, wenn diese in einer Absetzmulde mitgeführt werden, welche mit den Schwenk-Hebearmen gekippt werden kann.

US 4 613 274 zeigt als nächsten Stand der Technik ein Transportfahrzeug mit einer Heckkipper-Ladebrücke und seitlich neben der Ladebrücke am Fahrzeugchassis befestigten Schwenk-Hebearmen zum Auf- und Abladen von Waren, wobei ein Ankippen der Ladebrücke nur mit Hilfe der Schwenk-Hebearme möglich ist. Zudem weist die hier gezeigte Konstruktion den Nachteil auf, dass der Schwenkwinkel der Schwenk-Hebearme relativ klein ist.

Es stellt sich daher die Aufgabe, ein Transportfahrzeug, eine Ladebrückeneinheit und ein Transportsystem zur Verfügung zu stellen, welche die Nachteile des Standes der Technik nicht aufweisen oder diese zumindest teilweise vermeiden.

Diese Aufgabe wird durch das Transportfahrzeug, die Ladebrückeneinheit und das Transportsystem gemäss den unabhängigen Patentansprüchen gelöst.

In einem ersten Aspekt der Erfindung weist ein Transportfahrzeug ein Basisfahrzeug und eine gegenüber dem Basisfahrzeug heckseitig abkippbare Ladebrücke, also eine Heckkipper-Ladebrücke auf, deren Ladefläche stirnseitig und an den Längsseiten durch bevorzugterweise im wesentlichen vertikale Begrenzungswände begrenzt ist, so dass sich die Ladebrücke zum Transport und zum heckseitigen Abkippen von losen Stück- und Schüttgütern eignet. Im Bereich der Fahrzeuglängsseiten sind zwei Schwenk-Hebearme angeordnet, zum Auf- bzw. Absetzen von Absetzbehältern auf das Fahrzeug bzw. von dem Fahrzeug. Die Schwenk-Hebearme können sowohl einen festen als auch einen variablen Schwenkradius aufweisen, was beispielsweise dadurch erreicht werden kann, dass diese knick- oder teleskopierbar ausgestaltet sind.

Die beiden Schwenk-Hebearme sind fest an der Ladebrücke angebaut, derart, dass sie bei einem Abkippen der Ladebrücke mit dieser mitgekippt werden.

Dabei sind die Betätigungszylinder der Schwenk-Hebearme an der Ladebrücke abgestützt, so dass sich die Schwenkwinkel der Ladebrücke und der Schwenk-Hebearme addieren. Zudem ist zwischen Ladebrücke und Basisfahrzeug ein doppeltwirkender Hydraulikzylinder angeordnet, mit dem sich die Ladebrücke in eine gewünschten Position sicher festlegen bzw. sowohl in als auch entgegen der Kipprichtung mit der Hydraulik bewegen lässt. Hierdurch ergibt sich ein universell einsetzbares Transportfahrzeug, welches wahlweise oder sogar gleichzeitig den Transport von Stück- bzw. Schüttgütern und Absetzbehältern erlaubt, wobei der effektive Schwenkwinkel der Schwenk-Hebearme durch Ankippen der Ladebrücke vergrössert werden kann und das Anheben bzw. Absetzen eines Absetzbehälters durch eine Lageänderung der Ladebrücke bewerkstelligt werden kann. Zudem ergibt sich der Vorteil, dass die Enden beider Schwenk-Hebearme miteinander verbunden werden können, ohne die Kippfunktion zu behindern. Diese Massnahme führt zu einer gesteigerten Stabilität des Aufbaus und ermöglicht zudem die Verwendung der Schwenk-Hebearme als Schwenk-Hebe-Portal mit Lastangriff zwischen den Armen.

Bevorzugterweise sind die Schwenk-Hebearme ausserhalb des von den Begrenzungswänden umschlossenen Bereichs angeordnet, also ausserhalb der eigentlichen Ladefläche, so dass diese nicht mit dem zu transportierenden Gut in Berührung kommen können und eine unnötige Versperrung der Ladefläche verhindert wird.

Bevorzugterweise ist die Ladebrücke mit zwei heckseitigen Kippgelenken fest am Basisfahrzeug angebaut, d.h. nicht als Wechselaufbau ausgestaltet, wodurch sich besonders kostengünstige Fahrzeuge realisieren lassen.

Ist die Ladebrücke als Wechselaufbau ausgebildet und mittels Schnellwechselbefestigungen am Basisfahrzeug befestigt, so kann sie auf einfache Weise entfernt und durch einen anderen Wechselaufbau ersetzt werden, z.B. durch einen Tankaufsatz. Die zwei Schwenk-Hebearme verbleiben an der Ladebrücke und müssen nicht als Ballast mit dem Fahrzeug mitgeführt werden, was einem wirtschaftlichen Betrieb des Transportfahrzeugs zuträglich ist. Zudem ergibt sich der Vorteil, dass die max. Breite eines anderen auf dem Fahrzeug anzuordnenden Wechselaufbaus nicht durch das lichte Mass zwischen den beiden Schwenk-Hebearmen beschränkt ist.

In einer bevorzugten Ausführungsform ist das Transportfahrzeug ein Abrollkipperfahrzeug mit einem zentralen Ladearm oder mit einer Seilbetätigung, dessen Ladebrücke als Ladebrückeneinheit zusammen mit den zwei Schwenk-Hebearmen als Wechselaufbau in Form einer Abrollkipperbrücke ausgestaltet ist, welche mit dem zentralen Ladearm oder mit der Seilbetätigung auf das Basisfahrzeug gezogen werden kann. Auf diese Weise besteht die Möglichkeit, dass Fahrzeug je nach Bedarf zum Transport von Rollbehältern, Absetzbehältern und/oder Stück- bzw. Schüttgütern zu verwenden und zudem auch andere als Abrollkipperbrücke ausgebildete Wechselaufbauten zu verwenden.

Da das Fahrzeug derartig ausgestaltet ist, dass zum Abkippen eines Absetzbehälters die Ladebrücke gegenüber dem Basisfahrzeug und zusätzlich die Schwenk-Hebearme gegenüber dem Basisfahrzeug und zusätzlich gegenüber der Ladebrücke bewegbar sind, lassen sich durch Halterung des Absetzbehälters an den Schwenk-Hebearmen und gleichzeitiger drehbarer Anlenkung desselben im hinteren Bereich der Ladebrücke, z.B. durch Eingreifen von Kippbolzen in Kipphaken, Abkippwinkel des Absetzbehälters erzielen, die deutlich grösser sind als der maximale Kippwinkel der Ladebrücke.

Vorteilhafterweise ist die Ladefläche des Transportfahrzeugs auf ihrer Rückseite von einer abklappbaren oder pendelbaren Heckbordwand begrenzt oder ist zumindest für den Fahrtbetrieb durch eine solche begrenzbar, so dass eine allseitig umschlossene muldenartige Ladebrücke resultiert.

Auch ist es bevorzugt, dass die Heckbordwand mit einem oder mehreren Kipphaken versehen ist, in die beim Abkippen ein Kippbolzen eines Absetzbehälters eingreifen kann, um den Behälter in diesem Bereich drehbar festzulegen. Auch ist es vorgesehen, Kippseile für diesen Zweck zu verwenden.

Bevorzugterweise ist die Ladefläche eine im wesentlichen ebene Fläche, wodurch sich der Vorteil ergibt, dass sie sich universell nutzen und gut reinigen lässt, was insbesondere für den Transport von losen Schüttgütern erstrebenswert ist.

Weist die Ladefläche feste oder verstellbare Formelemente auf, mit denen der Absetzbehälter auf der Ladefläche formschlüssig in horizontaler Richtung befestigt und/oder zentriert werden kann, bevorzugterweise gegen ein Verschieben in Fahrtrichtung beim Bremsen gesichert werden kann, so kann die Sicherheit beim Transport deutlich verbessert werden. Hierzu können beispielsweise Anschläge auf der Ladefläche angeordnet werden, welche von nach hinten zeigenden Stirnflächen in Längsrichtung verlaufender Stege gebildet sein können, wodurch sich der Vorteil ergibt, dass diese das Abkippen von Schüttgut von der Ladefläche und die Reinigung derselben praktisch nicht beeinträchtigen.

Auch ist es bevorzugt, wenn die Ladefläche von den Seiten her zur Mitte hin derartig abgesetzt ist, dass eine seitliche Zentrierung des Absetzbehälters auf der Ladefläche und/oder eine Sicherung desselben gegen seitliches Verrutschen durch Formschluss erfolgen kann.

In noch einer weiteren bevorzugten Ausführungsform sind in die Ladefläche einsteckbare oder eingesteckte Rungen vorgesehen, welche der seitlichen Führung eines auf der Ladefläche angeordneten Absetzbehälters dienen. Hierdurch ergibt sich der Vorteil, dass diese bei Nichtgebrauch entfernt werden können und sodann die gesamte Ladefläche, welche zudem eben ausgebildet sein kann, uneingeschränkt zur Verfügung steht.

Ebenfalls von Vorteil ist es, wenn die seitlichen Begrenzungswände feste und/oder verstellbare Formelemente, wie z.B. Nocken, zur in horizontaler und/oder vertikaler Richtung formschlüssigen Befestigung und/oder Zentrierung eines Absetzbehälters auf der Ladebrücke aufweisen, wobei es bevorzugt ist, wenn entsprechende Formelemente vorhanden sind, die den Absetzbehälter gegen eine Verschieben in Fahrtrichtung während dem Transport, z.B. beim Bremsen, und/oder gegen ein Überkippen des Behälters beim Abkippen sichern.

Bevorzugterweise weist die Ladebrücke Befestigungsmittel, wie z.B. Ösen oder Haken, zur Befestigung von Kippseilen auf, welche bevorzugterweise an den Innenseiten der Begrenzungswände angeordnet sind.

Vorteilhafterweise ist das Transportfahrzeug ein Strassentransportanhänger oder ein Strassenfahrzeug mit eigenem Antriebsmotor, bevorzugterweise ein Lastkraftfahrzeug. Bei derartigen Fahrzeugen kommen die Vorteile der Erfindung besonders deutlich zum Tragen.

Ein zweiter Aspekt der Erfindung betrifft eine Ladebrückeneinheit zur Bildung eines Transportfahrzeugs gemäss dem ersten Aspekt der Erfindung durch Kombination derselben mit einem Basisfahrzeug. Die Ladebrückeneinheit umfasst eine Ladebrücke mit einer im wesentlichen geschlossenen Ladefläche und zwei an den Längsseiten der Ladebrücke angeordnete Schwenk-Hebearme auf. Dabei ist die Ladefläche mindestens an ihrer Stirnseite und an ihren beiden Längsseiten vollständig von im wesentlichen vertikalen Begrenzungswänden begrenzt, zur Bereitstellung eines mindestens dreiseitig umschlossenen Ladeflächenbereichs. Die Schwenk-Hebearme sind fest an der Ladebrücke angebaut, derart, dass sie beim Abkippen der Ladebrücke mit dieser mitgekippt werden. Die Betätigungszylinder der Schwenk-Hebearme, mit welchen diese gegenüber der Ladebrücke bewegbar sind, sind an der Ladebrücke abgestützt.

In einer bevorzugten Ausführungsform ist die Ladebrückeneinheit als Wechselaufbau mit Schnellwechselbefestigungen ausgestaltet, so dass diese nach Bedarf auf einem entsprechenden Basisfahrzeug für Wechselaufbauten zum Einsatz kommen kann. Sie kann beispielsweise als Abrollkipperbrücke ausgebildet sein, bevorzugterweise für einen Hakenabroller, die nach Bedarf auf einem Abrollkipperfahzzeug zum Einsatz kommt.

Zum Beladen eines Transportfahrzeugs oder einer Ladebrückeneinheit nach einem der vorangehenden Aspekte der Erfindung kann ein mit einem schüttfähigen Gut, z.B. Bauschutt, befüllter Absetzbehälter durch Kippen auf die Ladebrücke des Transportfahrzeugs bzw. der Ladebrückeneinheit entleert werden. Das Anheben des Absetzbehälters in eine Position über der Ladebrücke und das Kippen desselben zwecks Entleerung erfolgt unter Zuhilfenahme der beiden Schwenk-Hebearme des Transportfahrzeugs bzw. der Ladebrückeneinheit, und zwar mit oder ohne zusätzliche Haltemittel wie Kipphaken oder Kippseile.

Das Beladen der zumindest stirnseitig und längsseitig von im wesentlichen vertikalen Begrenzungsflächen vollständig umschlossenen Ladebrücke eines Transportfahrzeugs gemäss dem ersten Aspekt der Erfindung oder einer Ladebrückeneinheit gemäss dem zweiten Aspekt der Erfindung mit einem Absetzbehälter zum Transport desselben kann derartig erfolgen, dass zuerst ein Absetzbehälter bereitgestellt wird, dessen Seitenwände an ihren Aussenseiten Auflagemittel aufweisen zur Lagerung des Absetzbehälters auf Stützflächen, und der Absetzbehälter sodann mit den Auflagemittel auf an den seitlichen Begrenzungswänden der Ladebrücke befindlichen Stützflächen aufgesetzt wird zur Lagerung des Absetzbehälters auf der Ladebrücke. Dabei wird der Absetzbehälter mindestens teilweise in den Bereich zwischen den beiden seitlichen Begrenzungswänden der Ladebrücke eingeführt.

Ein dritter Aspekt der Erfindung betrifft ein Transportsystem für die Durchführung des ersten der beiden gerade zuvor beschriebenen Verfahren zum Beladen eines Transportfahrzeugs oder einer Ladebrückeneinheit, welches einen oder mehrere Absetzbehälter und ein Transportfahrzeug gemäss dem ersten Aspekt der Erfindung oder eine Ladebrückeneinheit gemäss dem zweiten Aspekt der Erfindung umfasst. Die Seitenwände der Absetzbehälter weisen an ihren Aussenseiten Auflagemittel wie z.B. vorspringende Profilelemente oder Tragbolzen auf, mit denen der Absetzbehälter auch bei maximaler Beladung sicher auf geeignete Stützflächen aufgesetzt und von diesen getragen werden kann. Dabei sind die Ladebrücke der Ladebrückeneinheit bzw. des Transportfahrzeugs und die Absetzbehälter derartig ausgestaltet und insbesondere derartig dimensioniert, dass die Auflagemittel der Absetzbehälter auf Stützflächen aufsetzbar sind, die an den Oberseiten und/oder an den Innenseiten der seitlichen Begrenzungswände der Ladebrücke angeordnet sind, wobei der jeweilige Absetzbehälter in den Raum zwischen den seitlichen Begrenzungswänden eintritt. Hierdurch ergibt sich der Vorteil, dass eine Zentrierung und/oder Befestigung von Wechselbehältern auf der Ladebrücke möglich ist, ohne dass hierfür eine spezielle Ausgestaltung der eigentlichen Ladefläche nötig wäre. Auch kann auf diese Weise die Ladebrückenbreite praktisch vollständig genutzt werden.

Bevorzugterweise weisen die Absetzbehälter hakenartige Haltemittel auf, mit welchen sie beim Kippen der Ladebrücke durch Eingreifen in Formelemente an den Seitenwänden formschlüssig gegen ein Abrutschen und Überkippen gesichert auf der Ladebrücke gehalten werden. Diese Haltemittel und Formelemente sind bevorzugterweise im Bereich der Auflagemittel der Absetzbehälter und im Bereich der Stützflächen der Seitenwände angeordnet.

In einer bevorzugten Ausführungsform des Transportsystems sind die Stützflächen an den Oberseiten der seitlichen Begrenzungswände angeordnet und die Auflagemittel der Absetzbehälter derartig ausgestaltet, dass sie beim Aufliegen auf den Stützflächen die Oberkanten der seitlichen Begrenzungswände umgreifen, so dass zwischen dem Absetzbehälter und der jeweiligen Begrenzungswand ein Formschluss in horizontaler Richtung quer zur bestimmungsgemässen Fahrtrichtung resultiert, der ein Aufbiegen der seitlichen Begrenzungswand nach aussen hin sicher verhindert.

Weitere bevorzugte Ausführungen der Erfindung ergeben sich aus den abhängigen Ansprüchen und aus der nun folgenden Beschreibung anhand der Figuren, wobei lediglich die Figuren 4-10 erfindungsgemässe Transportfahrzeuge bzw. Ladebrückeneinheiten zeigen. Im einzelnen zeigen:
Fig. 1 eine Seitenansicht eines Transportfahrzeugs mit fest am Basisfahrzeug montierter Ladebrücke;
Fig. 2 eine rückseitige Ansicht des Transportfahrzeugs von Fig. 1;
Fig. 3 eine Seitenansicht des Transportfahrzeugs aus Fig. 1 und Fig. 2 mit abgekippter Ladebrücke; -
Fig. 4 eine Seitenansicht eines erfindungsgemässen Transportfahrzeugs mit einer als Wechselaufbau ausgestalteten Ladebrücke;
Fig. 5 eine Seitenansicht des Transportfahrzeugs aus Fig. 4 mit angekippter Ladebrücke;
Fig. 6 eine Seitenansicht der als Wechselaufbau ausgestalteten Ladebrücke des Transportfahrzeugs aus den Figuren 4 und 5 im Nicht-Gebrauchszustand;
Fig. 7 eine Seitenansicht eines erfindungsgemässen Rollkipper-Transportfahrzeugs mit einer als Rollkipperaufsatz ausgebildeten Ladebrücke;
Fig. 8 eine Seitenansicht des Transportfahrzeugs aus Fig. 7 mit.abgekippter Ladebrücke;
Fig. 9 eine Seitenansicht der als Rollkipperaufsatz ausgestalteten Ladebrücke des Transportfahrzeugs von Fig. 7 im Nicht-Gebrauchszustand;
Fig. 10 eine Seitenansicht des Fahrzeugs aus den Figuren 7 und 8 beim Abkippen von Material aus einer Absetzmulde;
Fig. 11 eine rückseitige Ansicht eines Transportfahrzeugs gemäss Fig. 1 mit abgesetzter Ladefläche bei geöffneter Heckklappe;
Fig. 12 eine Ansicht wie Fig. 11, jedoch mit ebener Ladefläche mit in die Ladefläche eingesteckten Rungen;
Fig. 13 eine Seitenansicht eines Transportfahrzeugs mit einem auf den Seitenwänden der Ladebrücke gelagerten Absetzbehälter;
Fig. 14 eine rückseitige Ansicht des Transportfahrzeugs gemäss Fig. 13 bei geöffneter Heckklappe;
Fig. 15 das Detail "Z" aus Fig. 13;
Fig. 16 eine Ansicht wie Fig. 14, jedoch mit einer auf Vorsprüngen auf den Innenseiten der seitlichen Begrenzungswände gelagerten Absetzmulde; und
Fig. 17 eine teilweise geschnittene Seitenansicht eines Transportfahrzeugs ähnlich dem aus Fig. 1 beim Entleeren einer Absetzmulde auf dessen Ladebrücke.

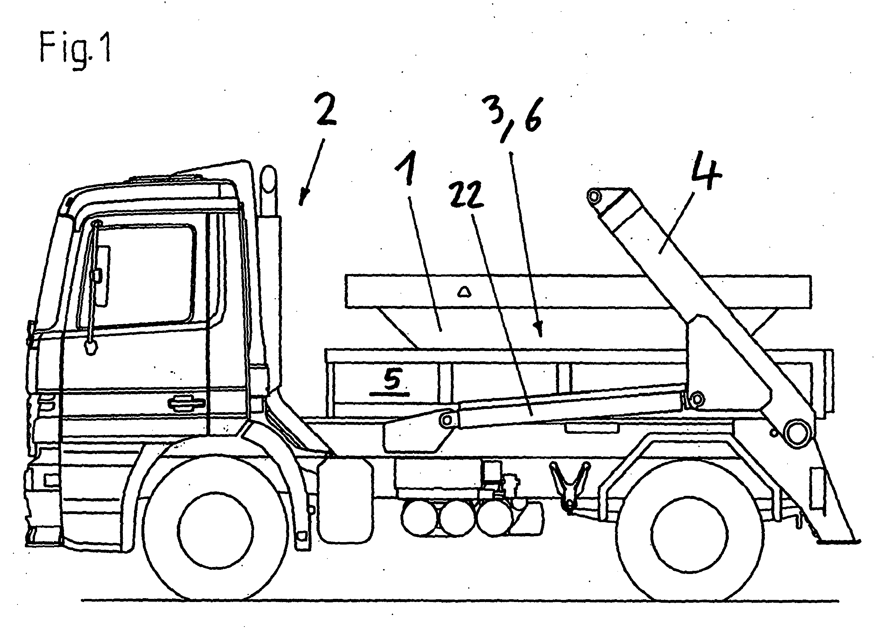

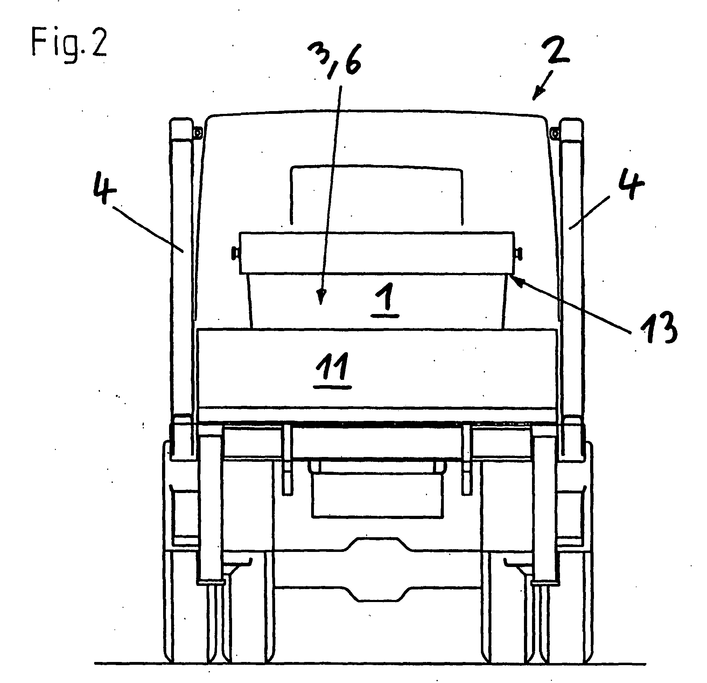

Der Grundaufbau eines Transportfahrzeugs ist in Fig. 1 zu erkennen. Das hier in der Seitenansicht gezeigte Lastkraftfahrzeug umfasst ein zweiachsiges Basisfahrzeug 2 mit Antriebsmotor, eine Ladebrücke 6 mit ebener Ladefläche 3, auf der gerade eine Absetzmulde 1 angeordnet ist, und seitlich an den Fahrzeuglängsseiten angeordnet je ein Schwenk-Hebearm 4 zum Auf- und Abladen von Absetzmulden 1. Wie in Zusammenschau mit Fig. 2 ersichtlich wird, welche das Lastkraftfahrzeug von der Rückseite zeigt, befinden sich die Schwenk-Hebearme 4 ausserhalb des von den seitlichen Begrenzungswänden 5, der Stirnwand und der Heckbordwand 11 umschlossenen Raumes, so dass eine unversperrte Ladefläche 3 resultiert und eine Beschädigung der Ladung durch die Schwenk-Hebearme 4 bzw. durch deren Betätigungszylinder 22 ausgeschlossen ist.

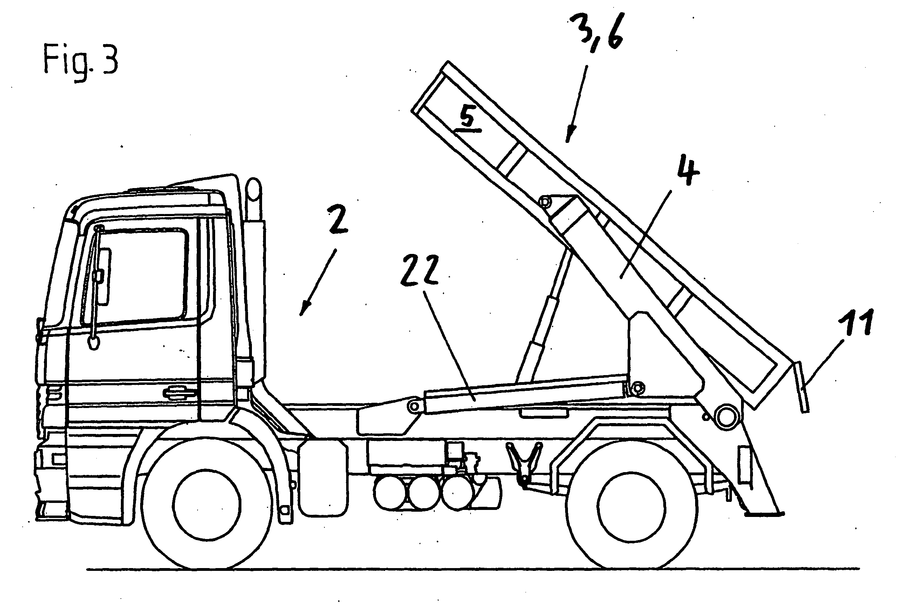

Wie aus Fig. 3 hervorgeht, ist die Ladebrücke 6 des Fahrzeugs als Heckkipperbrücke ausgestaltet, welche über heckseitige Kippgelenke fest mit dem Basisfahrzeug 2 verbunden ist und mittels eines zentral unter der Ladefläche 3 angeordneten Hydraulikzylinders abgekippt werden kann. Dabei verbleiben die Schwenk-Hebearme 4, welche fest mit dem Basisfahrzeug 2 verbunden sind, in ihrer Position. Wie hier ebenfalls zu erkennen ist, ist die Heckbordwand 11 zum Abkippen von Schüttgütern als Pendelbordwand ausgestaltet. In einer Variante ist es auch vorgesehen, die Ladebrücke über Hebeseile mit den Schwenk-Hebearmen 4 zu kippen, so dass auf den zentralen Hydraulikzylinder verzichtet werden kann und sich Kosten und Fahrzeuggewicht reduzieren lassen.

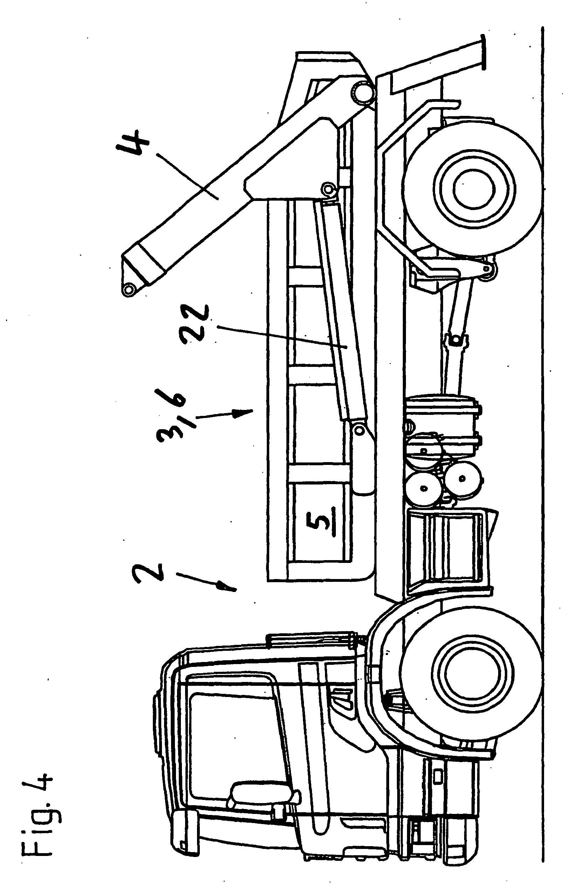

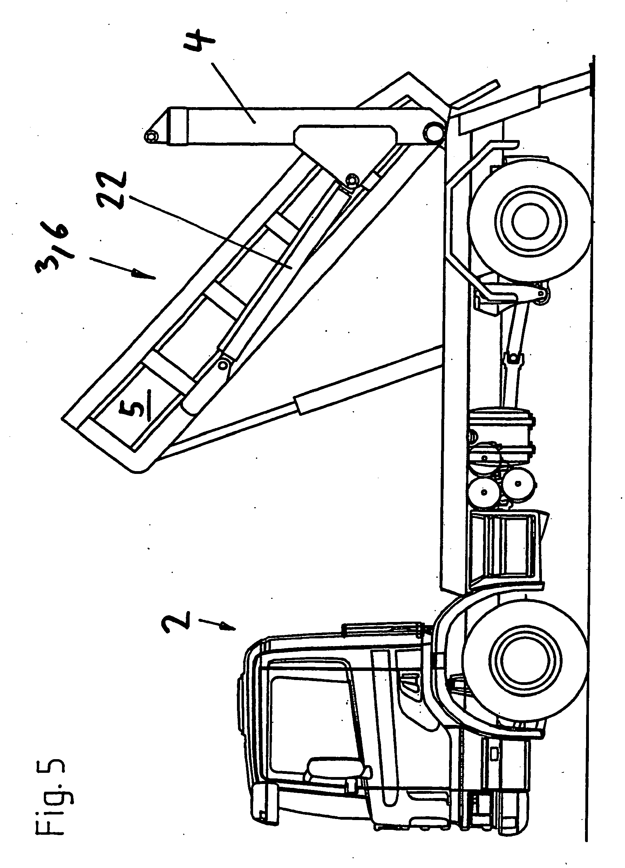

Fig. 4 zeigt ein erfindungsgemässes Wechselaufsatz-Transportfahrzeug in der Seitenansicht, bei dem ein Hilfsrahmen 20 des die Ladebrücke 6 mit der Ladefläche 3 umfassenden Wechselaufbaus mittels Schnellwechselbefestigungen am Basisfahrzeug 2 befestigt ist und je nach Bedarf gegen einen anderen Wechselaufbau, z.B. einen Tankbehälter, ausgetauscht werden kann. Zwischen dem Hilfsrahmen und der Ladebrücke 6 ist der doppeltwirkende Hydraulikzylinder zum Kippen der Ladebrücke 6 angeordnet, so dass sich die gesamte Kipphydraulik am Wechselaufbau befindet, wie besser in Fig. 5 erkennbar ist. Es sind jedoch ebenfalls Ausführungen vorgesehen, bei denen die Ladebrücke 6 direkt über als heckseitige Kippgelenke ausgestaltete Schnellwechselbefestigungen mit dem Basisfahrzeug 2 verbunden ist und mittels eines am Basisfahrzeug befestigten Hydraulikzylinders gekippt werden kann. In einer Variante ist es auch vorgesehen, die Ladebrücke 6 mit den an ihr befestigten Schwenk-Hebearmen 4 nicht als Wechselaufsatz auszubilden, sondern über herkömmliche heckseitige Kippgelenke dauerhaft mit dem Basisfahrzeug 2 zu verbinden, wodurch sich Kosten und Fahrzeuggewicht einsparen lassen.

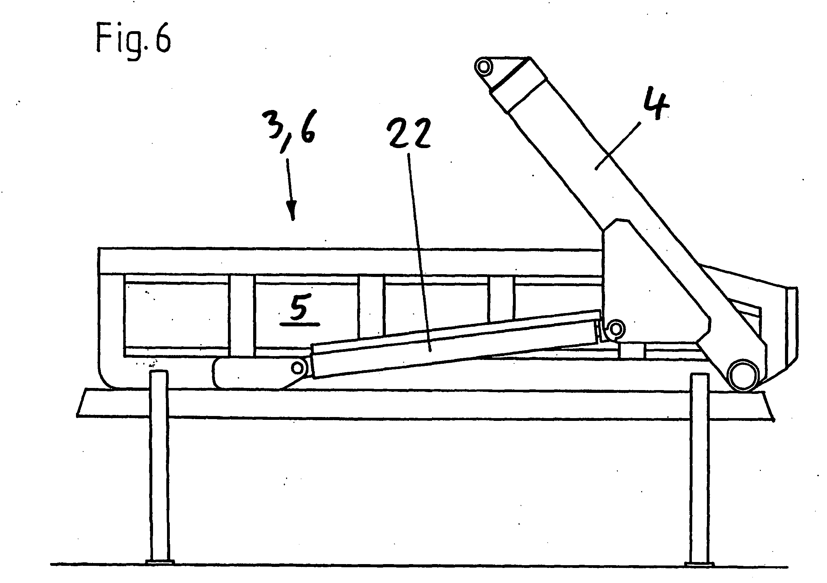

Wie aus Fig. 6 zu erkennen ist, welche den Wechselaufbau des Fahrzeugs aus den Figuren 4 und 5 nach dessen Abnahme vom Basisfahrzeug in einer Nicht-Gebrauchssituation auf Lagerstützen zeigt, sind die Schwenk-Hebearme 4 zusammen mit ihren Betätigungszylindern 22 fest mit der Ladebrücke 6 verbunden, so dass sie beim Kippen der Ladebrücke 6 mit dieser mitgekippt werden (siehe Fig. 5), und bilden so zusammen mit dieser eine erfindungsgemässe Ladebrückeneinheit.

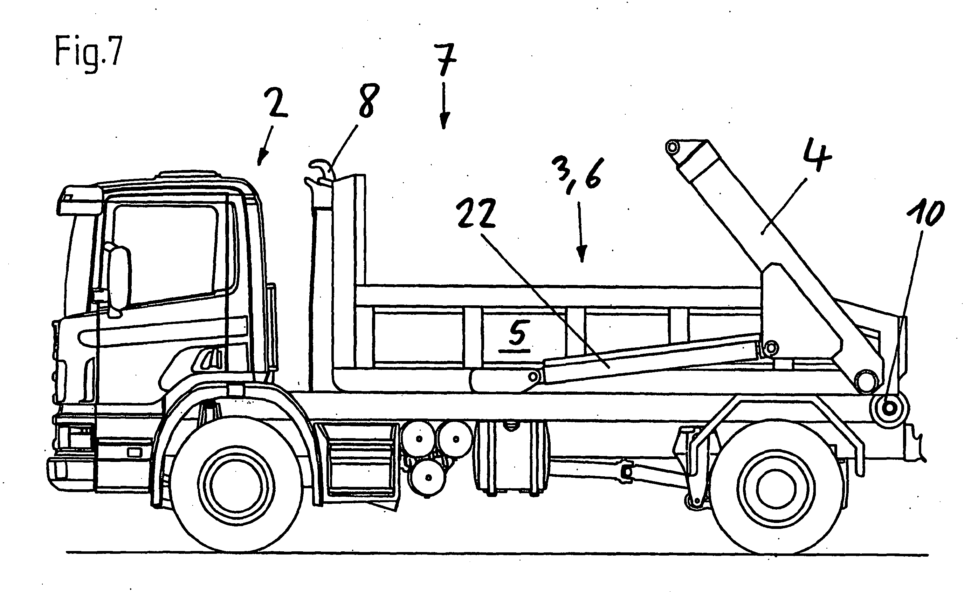

Fig. 7 zeigt ein erfindungsgemässes Rollkipperfahrzeug in der Seitenansicht, bei welchem die Ladebrücke 6 als Abrollkipperbrücke ausgestaltet ist und mittels des zentralen Ladearms 8 als Wechselaufbau auf das Basisfahrzeug 2 aufgesetzt bzw. von diesem entfernt werden kann, so dass je nach Bedarf auch andere Abrollkipperaufsätze, wie z.B. Rollmulden oder Rollkontainer, mit dem Basisfahrzeug kombiniert werden können.

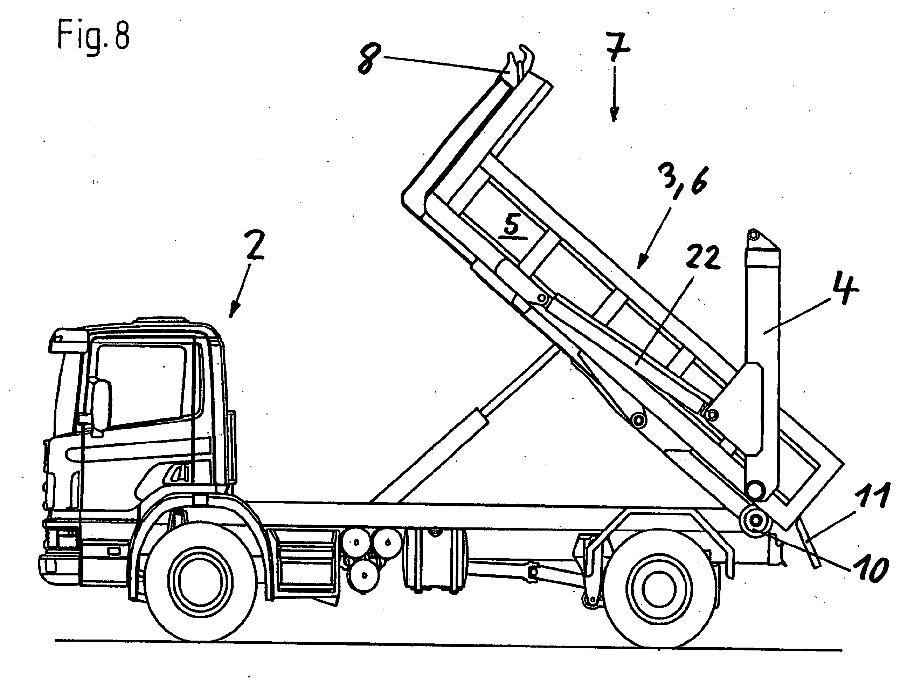

Wie aus Fig. 8 ersichtlich wird, bildet der zentrale Ladearm 8 gleichzeitig einen Kippermechanismus, mit welchem der gesamte Wechselaufbau umfassend die Ladebrücke 6 und die Schwenk-Hebearme 4 nach hinten abgekippt werden kann. Im dargestellten Fall ist die Heckbordwand 11 abklappbar ausgestaltet.

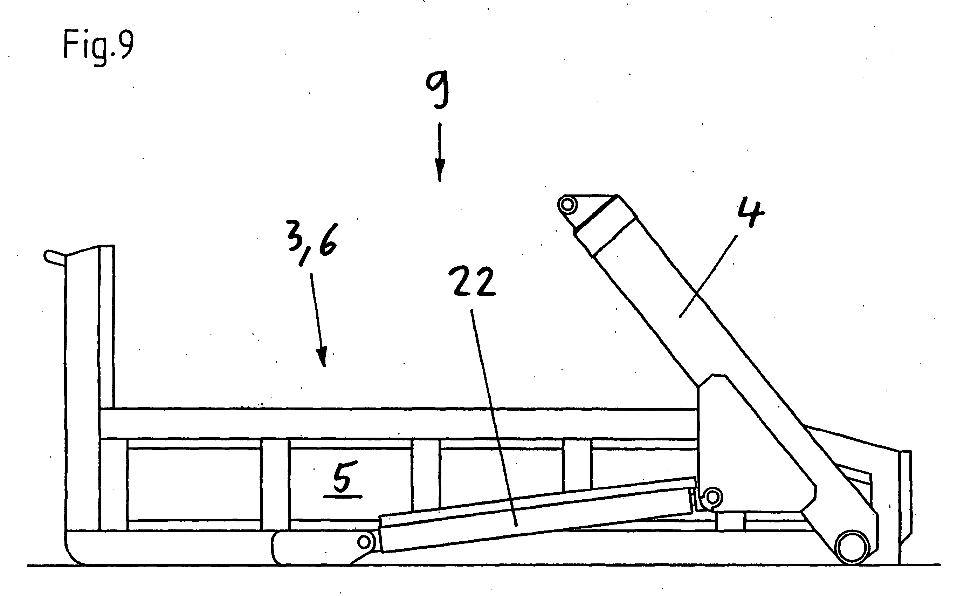

Wie in Fig. 9 zu erkennen ist, welche den Abrollkipper-Wechseläufbau des Fahrzeugs aus den Figuren 7 und 8 nach dessen Entfernung vom Rollkipperbasisfahrzeug 2 in einer Nicht-Gebrauchssituation zeigt, sind auch hier die Schwenk-Hebearme 4 fest mit der Ladebrücke 6 verbunden und bilden so mit dieser zusammen eine erfindungsgemässe Ladebrückeneinheit.

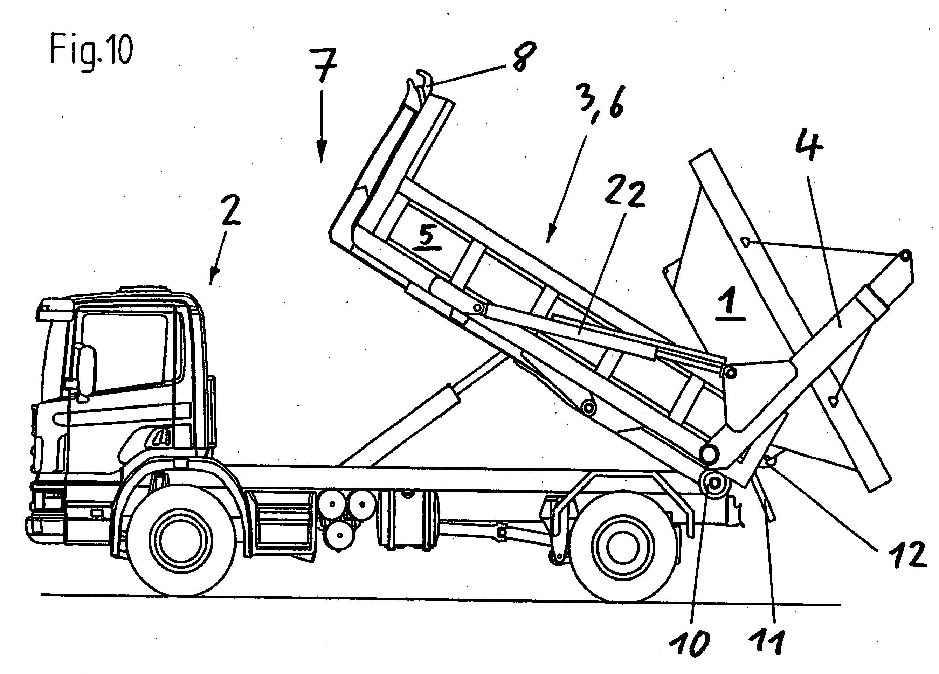

Fig. 10 zeigt das Transportfahrzeug aus den Figuren 7 und 8 beim Abkippen einer Absetzmulde 1 zwecks Entleerung derselben in einer Seitenansicht. Wie zu erkennen ist, kann hierzu nicht nur die Ladebrücke 6 wie in Fig. 8 gezeigt gegenüber dem Basisfahrzeug 2 abgekippt werden, sondern zusätzlich auch die Schwenk-Hebearme 4 mittels ihrer Betätigungszylinder 22 gegenüber der Ladebrücke 6 und gegenüber dem Basisfahrzeug 2, so dass bei einer Befestigung der Mulde 1 wie dargestellt an den Schwenk-Hebearmen 4 bei gleichzeitigem Eingreifen der Kippbolzen der Mulde 1 in Kipphaken 12 an der abgeklappten Heckbordwand 11 ein Kippwinkel der Absetzmulde 1 gegenüber dem Basisfahrzeug 2 realisierbar wird, der deutlich grösser ist als der Kippwinkel der Ladebrücke 6 gegenüber demselben. Auf diese Weise können auch steilwandige Mulden 1 sicher entleert werden. Auch ergibt sich hierdurch die Möglichkeit, durch Ankippen der Ladebrücke 6 den effektiven Schwenkwinkel der Schwenk-Hebearme 4 zu vergrössern.

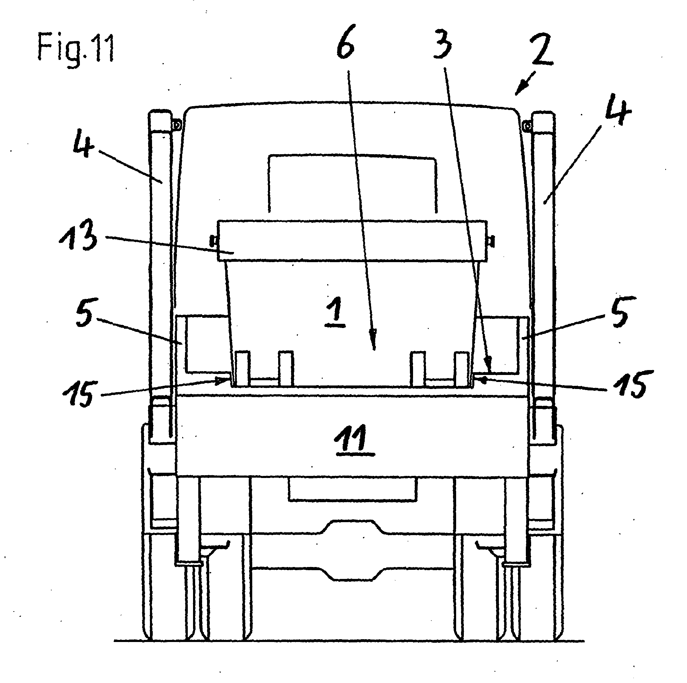

Die Figuren 11 bis 12 zeigen jeweils ein Transportfahrzeug mit ähnlichem Aufbau wie das Fahrzeug gemäss Fig. 1 in einer rückseitigen Ansicht, wobei die Heckbordwand 11 jeweils abgeklappt ist, um Einsicht in den von der Stirnwand und den Begrenzungswänden 5 umschlossen Raum und zur Ladefläche 3 zu gewähren.

Bei dem in Fig. 11 gezeigten Fahrzeug ist die Ladefläche 3 seitlich abgesetzt, so dass seitliche Anschläge 15 entstehen, mit denen die Absetzmulde 1 auf der Ladefläche 3 zentriert und seitlich festgelegt wird.

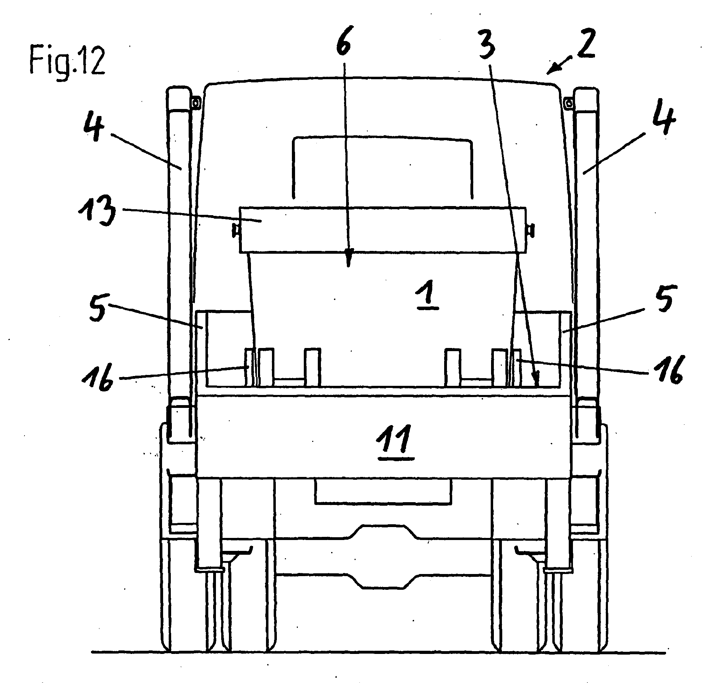

Bei dem in Fig. 12 dargestellten Fahrzeug, welches eine ebene Ladefläche 3 aufweist, wird die zuvor beschriebene Funktion von in die Ladefläche eingesteckten Rungen 16 übernommen.

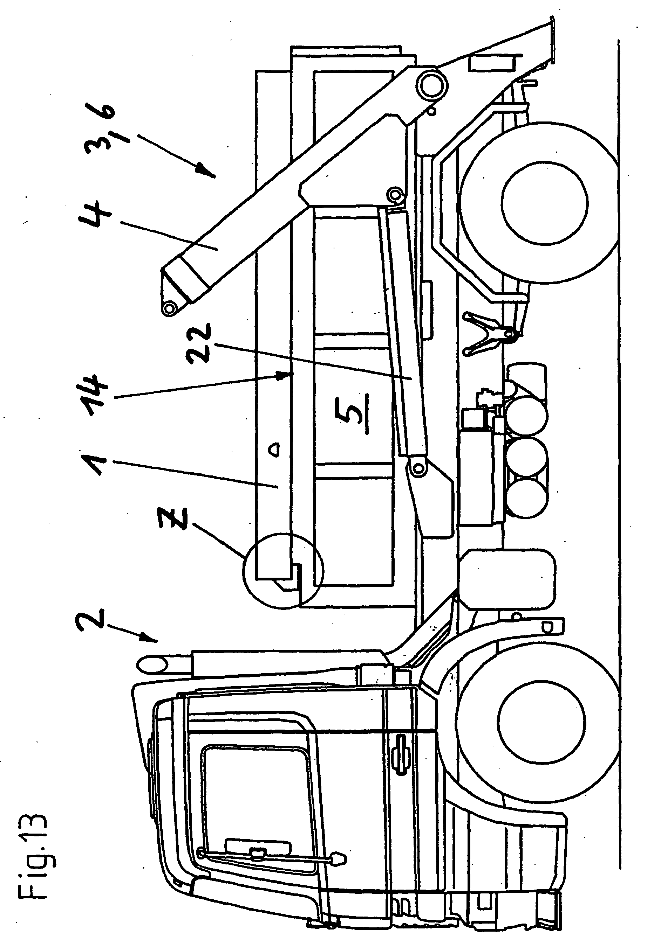

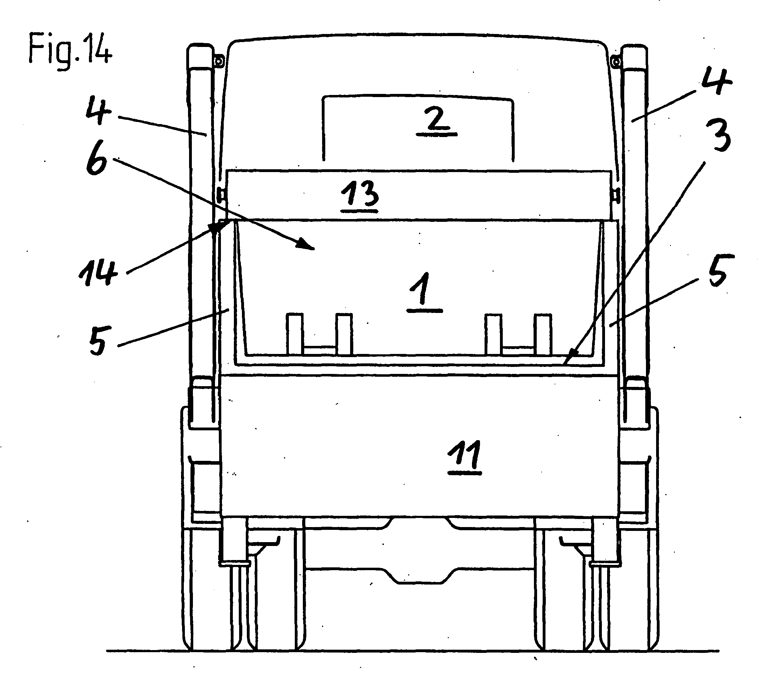

Die Figuren 13 und 14 zeigen eine Seitenansicht und eine rückseitige Ansicht eines Transportfahrzeugs ähnlich dem in den Figuren 11 und 12 gezeigten Fahrzeug. Im Gegensatz zu den in diesen Figuren dargestellten Situationen, bei denen der zu transportierende Absetzbehälter 1 mit seinem Boden auf der Ladefläche 3 abgestellt ist, ist dieser hier mit seinem Randprofil 13 auf den seitlichen Begrenzungswänden 5 aufgelegt, und zwar auf Stützflächen 14 an der Oberseite der Begrenzungswände 5.

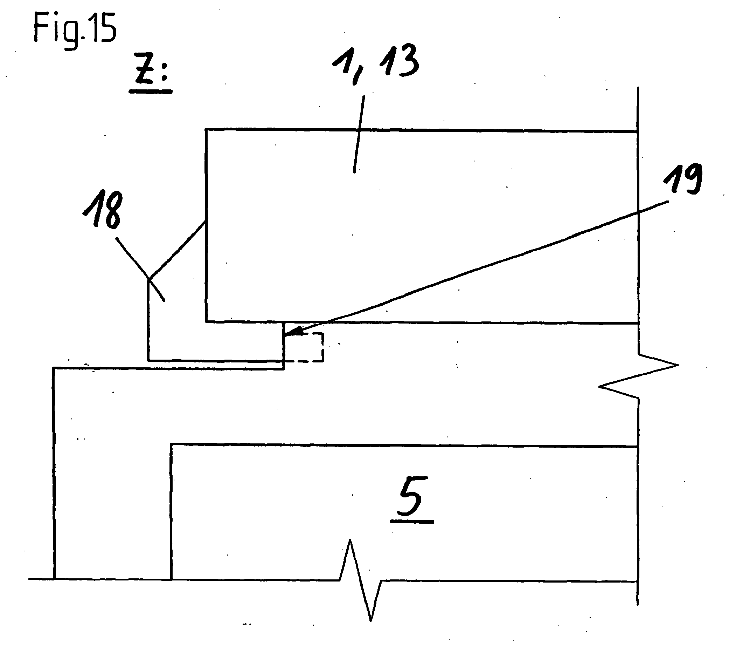

Wie aus Fig. 15 hervorgeht, welche die Einzelheit "Z" aus Fig. 13 im Detail zeigt, weist der Absetzbehälter 1 am vorderen Ende seines Randprofils 13 auf jeder seiner Längsseiten eine Haltenase 18 auf, die in eine stirnseitige Öffnung 19 an der jeweiligen Seitenwand 5 der Ladebrücke 6 eingreift und den Behälter dadurch bei einem Kippen der Ladebrücke 6 formschlüssig gegen ein Abrutschen und Überkippen sichert. Dadurch, dass die Einführungsrichtung der Haltenasen 18 in die stirnseitigen Öffnungen 19 identisch ist mit der Richtung einer etwaigen Rutschbewegung des Behälters 1 auf den Stützflächen 14 beim Kippen der Ladebrücke 6, erfolgt ein Eingreifen der Nasen 18 in die Öffnungen 19 beim Kippen automatisch. Ein Lösen des Eingriffs erfolgt durch Verschieben des Absetzbehälters 1 gegenüber der Ladebrücke 6 in Fahrtrichtung nach vorne.

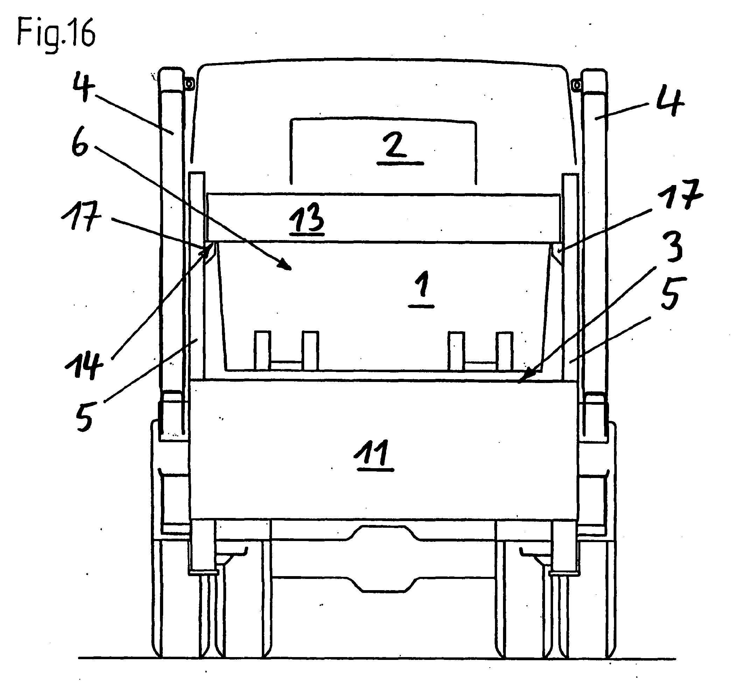

Fig. 16 zeigt eine Situation ähnlich wie in Fig. 14 dargestellt, jedoch mit dem Unterschied, dass hier die Absetzmulde 1 auf Stützflächen 14 an der Oberseite von Klappriegeln 17 gelagert ist, welche auf den Innenseiten der Begrenzungswände 5 angeordnet sind und für den Transport einer Absetzmulde 1 aus der jeweiligen Wand 5 herausgeklappt werden.

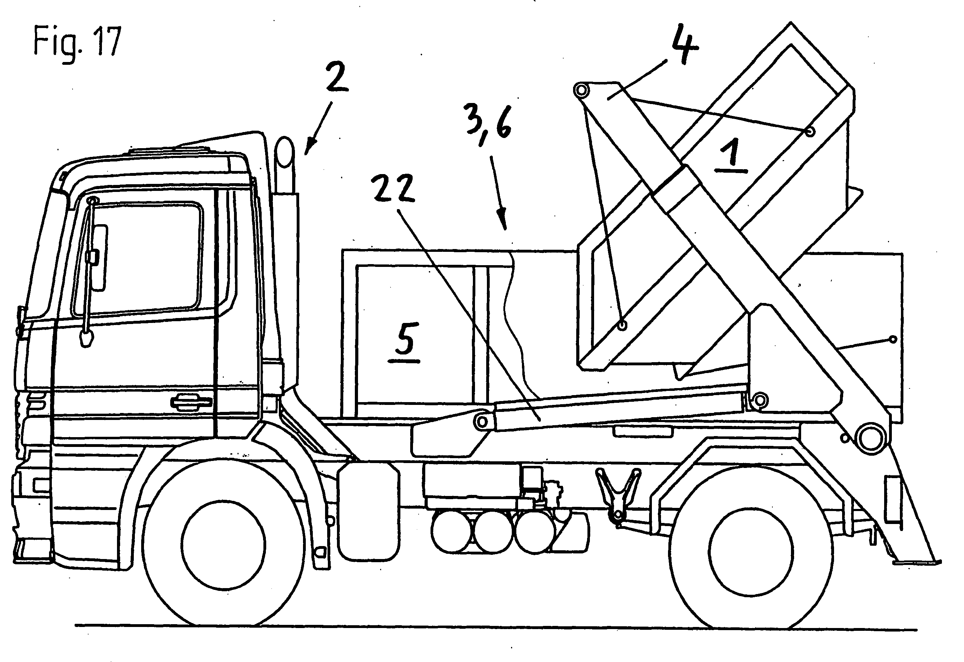

Fig. 17 zeigt ein Transportfahrzeug ähnlich dem aus Fig. 1 in einer teilweise geschnittenen Seitenansicht beim Abkippen einer Absetzmulde 1 zwecks Entleerung derselben auf seine Ladefläche 3. Wie zu erkennen ist, wird hierzu die mittels Hebeseilen von den Schwenk-Hebearmen 4 getragene Absetzmulde 1 über Kippseile 21 derart mit Befestigungsmitteln auf der Innenseite der Seitenwände 5 der Ladebrücke 6 verbunden, dass sie in Fahrtrichtung vornüber gekippt und dadurch auf die Ladebrücke 6 entleert werden kann. Hierdurch ergibt sich der Vorteil, dass die entleerte Mulde am Sammelplatz verbleiben kann, so dass die zusätzliche Fahrt zur Bereitstellung einer leeren Mulde entfällt. Um möglichst viele Mulden pro Einsatz entleeren zu können, sind die Seitenwände 5 bei dem hier gezeigten Transportfahrzeug deutlich höher ausgebildet als bei den zuvor gezeigten Fahrzeugen.

## Patentansprüche

1. Transportfahrzeug mit einer gegenüber dem Basisfahrzeug (2) abkippbaren Ladebrücke (6) mit einer zumindest stirnseitig und an den Längsseiten von Begrenzungswänden (5) begrenzten Ladefläche (3), zum Transport und zum Entladen durch heckwärtiges Abkippen von losen Stück- und Schüttgütern, und mit zwei im Bereich der Fahrzeuglängsseiten angeordneten Schwenk-Hebearmen (4) mit Betätigungszylindern (22), für das Aufladen von Absetzbehältern (1) auf die Ladebrücke (6) und das Abladen von Absetzbehältern (1) von der Ladebrücke (6), **dadurch gekennzeichnet, dass** die zwei Schwenk-Hebearme (4) fest an den Längsseiten der Ladebrücke (6) angebaut sind, derart, dass sie bei einem Abkippen der Ladebrücke (6) mit dieser mitgekippt werden, wobei die Betätigungszylinder (22) der Schwenk-Hebearme (4) an der Ladebrücke (6) abgestützt sind und das Transportfahrzeug derartig ausgestaltet ist, dass ein Abkippen eines auf der Ladebrücke (6) angeordneten Absetzbehälters (1) unter Kippung der Ladebrücke (6) und unter zusätzlicher Bewegung der zwei Schwenk-Hebearme (4) sowohl gegenüber dem Basisfahrzeug als auch gegenüber der Ladebrücke erfolgen kann, zur Ermöglichung eines Kippwinkels des Absetzbehälters (1) beim Abkippen, der grösser ist als der Kippwinkel der Ladebrücke (6) und wobei das Fahrzeug zum Kippen der Ladebrücke (6) einen doppeltwirkenden Hydraulikzylinder aufweist.

2. Transportfahrzeug nach Anspruch 1, **dadurch gekennzeichnet, dass** die Schwenk-Hebearme (4) ausserhalb des von den Begrenzungswänden (5) umschlossenen Bereichs angeordnet sind.

3. Transportfahrzeug nach einem der vorangehenden Ansprüche, **dadurch gekennzeichnet, dass** die Ladebrücke (6) fest am Basisfahrzeug (2) angebaut ist.

4. Transportfahrzeug nach Anspruch 1 oder 2, **dadurch gekennzeichnet, dass** die Ladebrücke (6) als Wechselaufbau ausgestaltet ist, derart, dass diese abnehmbar mittels Schnellwechselbefestigungen am Basisfahrzeug (2) befestigt ist.

5. Transportfahrzeug nach Anspruch 4, **dadurch gekennzeichnet, dass** das Transportfahrzeug ein Abrollkipperfahrzeug (7) mit einem zentralen Ladearm (8) oder mit Seilbetätigung ist und die Ladebrücke (6) als Abrollkipperbrücke (9) ausgestaltet ist und mit dem zentralen Ladearm (8) oder der Seilbetätigung auf das Basisfahrzeug (2) gezogen werden kann.

6. Transportfahrzeug nach einem der vorangehenden Ansprüche, **dadurch gekennzeichnet, dass** die Ladefläche (3) an ihrer Rückseite von einer abklappbaren und/oder pendelbaren Heckbordwand (11) begrenzt ist oder begrenzbar ist.

7. Transportfahrzeug nach Anspruch 6, **dadurch gekennzeichnet, dass** die Heckbordwand (11) mit einem oder mit mehreren Kipphaken (12) versehen ist, zur Ermöglichung eines Abkippens eines Absetzbehälters (1) unter Einhaken von Kippbolzen desselben an den Kipphaken (12).

8. Transportfahrzeug nach einem der vorangehenden Ansprüche, **dadurch gekennzeichnet, dass** die Ladefläche (3) eine im wesentlichen ebene Fläche ist.

9. Transportfahrzeug nach einem der vorangehenden Ansprüche, **dadurch gekennzeichnet, dass** die Ladefläche (3) feste und/oder verstellbare Formelemente, insbesondere Anschläge aufweist, zur in horizontaler Richtung formschlüssigen Befestigung und/oder Zentrierung eines Absetzbehälters (1) auf der Ladefläche (3), insbesondere zum Sichern des Absetzbehälters (1) gegen ein Verschieben in Fahrtrichtung beim Bremsen.

10. Transportfahrzeug nach Anspruch 9, **dadurch gekennzeichnet, dass** die Ladefläche (3) abgesetzt ist, zur Zentrierung und/oder Verhinderung eines seitliches Verrutschens eines auf der Ladefläche (3) angeordneten Absetzbehälters (1) während dem Fahrtbetrieb.

11. Transportfahrzeug nach einem der vorangehenden Ansprüche, **dadurch gekennzeichnet, dass** in die Ladefläche (3) eingesteckte oder einsteckbare Rungen (16) vorhanden sind, zum seitlichen Führen eines auf der Ladefläche (3) angeordneten Absetzbehälters (1).

12. Transportfahrzeug nach einem der vorangehenden Ansprüche, **dadurch gekennzeichnet, dass** die seitlichen Begrenzungswände (5) feste und/oder verstellbare Formelemente, insbesondere Nocken aufweisen, zur in horizontaler und/oder vertikaler Richtung formschlüssigen Befestigung und/oder Zentrierung eines Absetzbehälters (1) auf der Ladebrücke (6), insbesondere zum Sichern des Absetzbehälters (1) gegen ein Verschieben in Fahrtrichtung beim Transport und/oder zur Sicherung des Absetzbehälters (1) beim Abkippen.

13. Transportfahrzeug nach einem der vorangehenden Ansprüche, **dadurch gekennzeichnet, dass** die Ladebrücke (6), insbesondere angeordnet an den Innenseiten der Begrenzungswände (5), Befestigungsmittel für Kippseile (21), aufweist.

14. Transportfahrzeug nach einem der vorangehenden Ansprüche, **dadurch gekennzeichnet, dass** dieses ein Strassentransportanhänger oder ein motorgetriebenes Strassenfahrzeug, insbesondere ein Lastkraftfahrzeug ist.

15. Ladebrückeneinheit zur Bildung eines Transportfahrzeugs nach einem der vorangehenden Ansprüche durch Kombination mit einem Basisfahrzeug (2), umfassend:
a) eine Ladebrücke (6) mit einer im wesentlichen geschlossenen Ladefläche (3), wobei mindestens die Stirnseite und die Längsseiten der Ladefläche (3) vollständig von im wesentlichen vertikalen Begrenzungswänden (5) begrenzt sind, und
b) zwei an den Längsseiten der Ladebrücke (6) angeordnete Schwenk-Hebearme (4), welche fest an der Ladebrücke (6) angebaut sind, derart, dass sie bei einem Abkippen der Ladebrücke (6) mit dieser mitgekippt werden, wobei die Schwenk-Hebearme (4) Betätigungszylinder (22) aufweisen, welche an der Ladebrücke (6) abgestützt sind und mit welchen die Schwenk-Hebearme (4) gegenüber der Ladebrücke (6) bewegbar sind.

16. Ladebrückeneinheit nach Anspruch 15, **dadurch gekennzeichnet, dass** diese als Wechselaufbau mit Schnellwechselbefestigungen ausgebildet ist, zur Ermöglichung einer zeitweisen Befestigung auf einem Basisfahrzeug (2) für Wechselaufbauten.

17. Ladebrückeneinheit nach einem der Ansprüche 15 bis 16, **dadurch gekennzeichnet, dass** diese als Abrollkipperbrücke (9), insbesondere für Hakenabroller, ausgebildet ist, zur Ermöglichung einer zeitweisen Befestigung auf einem Abrollkipperfahrzeug (7).

18. Transportsystem umfassend ein Transportfahrzeug nach einem der Ansprüche 1 bis 14 oder eine Ladebrückeneinheit nach einem der Ansprüche 15 bis 17 und einen oder mehrere Absetzbehälter (1), deren Seitenwände (5) auf ihren Aussenseiten Auflagemittel (13) aufweisen zur Lagerung der Behälter (1) auf Stützflächen (14), wobei die Ladebrücke (6) und die Absetzbehälter (1) derartig ausgestaltet sind, dass die Absetzbehälter (1) mit ihren Auflagemitteln (13) auf an den Oberseiten und/oder an den Innenseiten der seitlichen Begrenzungswände (5) der Ladebrücke (6) angeordneten Stützflächen (14) gelagert werden können und dabei zumindest teilweise in den Raum zwischen diesen Begrenzungswänden (5) eintreten.

19. Transportsystem nach Anspruch 18, **dadurch gekennzeichnet, dass** die Absetzbehälter (1), insbesondere im Bereich ihrer Auflagemittel (13), hakenartige Haltemittel (18) aufweisen, welche beim Abkippen des auf den Stützflächen (14) angeordneten Behälters durch Kippen der Ladebrücke (6), insbesondere im Bereich der Stützflächen (14) angeordnete Formelemente (19) der Seitenwände (5) formschlüssig umgreifen zur Sicherung des Behälters (1) auf der Ladebrücke (6) gegen ein Abrutschen und Überkippen.

20. Transportsystem nach einem der Ansprüche 18 bis 19, **dadurch gekennzeichnet, dass** die Stützflächen (14) an den Oberseiten der seitlichen Begrenzungswände (5) angeordnet sind und die Auflagemittel (13) derartig ausgestaltet sind, dass sie beim Aufliegen auf den Stützflächen (14) die Oberkanten der seitlichen Begrenzungswände (5) umgreifen zur Erzeugung eines Formschlusses in horizontaler Richtung quer zur Fahrzeuglängsachse zwischen dem Absetzbehälter (1) und der jeweiligen seitlichen Begrenzungswand (5).

## Claims

1. A transportation vehicle with a load platform (6) which can be tipped relative to the base vehicle (2) and which has a load surface (3) bounded at least at the ends and on the longitudinal sides by boundary walls (5), for conveying and for unloading loose general cargo and bulk materials by rearward tipping, and with two pivoting-lifting arms (4) arranged in the vicinity of the vehicle longitudinal sides and with actuating cylinders (22) for loading skip-type containers (1) on to the load platform (6) and unloading skip-type containers (1) from the load platform (6), **characterised in that** the two pivoting-lifting arms (4) are securely mounted on the longitudinal sides of the load platform (6) in such a way that when the load platform (6) is tipped they are tipped along therewith, wherein the actuating cylinders (22) of the pivoting-lifting arms (4) are supported on the load platform (6) and the transportation vehicle is configured so that any tipping of a skip-type container (1) disposed on the load platform (6) can take place with tipping of the load platform (6) and with additional movement of the two pivoting-lifting arms (4) both in relation to the base vehicle and in relation to the load platform, so as to make possible during the tipping operation a tipping angle of the skip-type container (1) which is greater than the tipping angle of the load platform (6), and wherein for tipping the load platform (6) the vehicle has double-acting hydraulic cylinders.

2. A transportation vehicle according to Claim 1, **characterised in that** the pivoting-lifting arms (4) are disposed outside the zone enclosed by the boundary walls (5).

3. A transportation vehicle according to one of the preceding Claims, **characterised in that** the load platform (6) is securely mounted on the base vehicle (2).

4. A transportation vehicle according to Claim 1 or 2, **characterised in that** the load platform (6) is so designed as an interchangeable body that it is secured to the base vehicle (2) so as to be detachable by means of quick-release fastenings.

5. A transportation vehicle according to Claim 4, **characterised in that** the transportation vehicle is a roll-off tipper vehicle (7) with a central load arm (8) or is cable-operated and the load platform (6) is in the form of a roll-off platform (9) and can be pulled on to the base vehicle (2) by the central load arm (8) or by cable operation.

6. A transportation vehicle according to any one of the preceding Claims, **characterised in that** at its rear end the load surface (3) is bounded or can be bounded by a hinged and/or swinging tail end wall (11).

7. A transportation vehicle according to Claim 6, **characterised in that** the tail end wall (11) is provided with one or more tip hooks (12) to enable a skip-type container (1) to be tipped, with tip pins on the latter being engaged by the tip hooks (12).

8. A transportation vehicle according to any one of the preceding Claims, **characterised in that** the load surface (3) is a substantially flat surface.

9. A transportation vehicle according to any one of the preceding Claims, **characterised in that** the load surface (3) has fixed and/or adjustable shaped elements, in particular abutments, for the form-locking fastening in a horizontal direction and/or centring of a skip-type container (1) on the load surface (3), in particular so as to prevent the skip-type container (1) from shifting in the direction of travel under braking.

10. A transportation vehicle according to Claim 9, **characterised in that** the load surface (3) is offset for centring and/or preventing any lateral sliding of a skip-type container (1) disposed on the load surface (3) during travel operation.

11. A transportation vehicle according to any one of the preceding Claims, **characterised in that** posts (16), which are inserted or can be inserted into the load surface (3), are provided for the lateral guidance of a skip-type container (1) disposed on the load surface (3).

12. A transportation vehicle according to any one of the preceding Claims, **characterised in that** the lateral boundary walls (5) have fixed and/or adjustable shaped elements, in particular cams, for the form-locking fastening in a horizontal and/or vertical direction and/or for the centring of a skip-type container (1) on the load platform (6), in particular so as to prevent the skip-type container (1) from shifting in the direction of travel during transportation and/or for securing the skip-type container (1) during tipping.

13. A transportation vehicle according to any one of the preceding Claims, **characterised in that** the load platform (6) has fastening means for tipping cables (21), in particular arranged on the insides of the boundary walls (5).

14. A transportation vehicle according to any one of the preceding Claims, **characterised in that** it is a road transport trailer or an engine-driven road vehicle, in particular a lorry.

15. A load platform unit to form a transportation vehicle according to any one of the preceding Claims by combination with a base vehicle (2), comprising:
a) a load platform (6) with a substantially enclosed load surface (3), wherein at least the end side and the longitudinal sides of the load surface (3) are completely bounded by substantially vertical boundary walls (5), and
b) two pivoting-lifting arms (4) arranged on the longitudinal sides of the load platform (6), which are securely mounted on the load platform (6), so that during tipping of the load platform (6) they are tipped along with the latter, wherein the pivoting-lifting arms (4) have actuating cylinders (22) which are supported on the load platform (6) and with which the pivoting-lifting arms (4) can be moved in relation to the load platform (6).

16. A load platform unit according to Claim 15, **characterised in that** it is designed as an interchangeable body with quick-release fastenings so as to make possible temporary fastening to a base vehicle (2) for interchangeable structures.

17. A load platform unit according to one of Claims 15 to 16, **characterised in that** it is in the form of a roll-off tipper platform (9), in particular for hook-lift systems, so as to make possible temporary fastening on a roll-off tipper vehicle (7).

18. A transport system comprising a transportation vehicle according to any one of Claims 1 to 14 or a load platform unit according to any one of Claims 15 to 17 and one or more skip-type containers (1), the side walls (5) of which have on their outsides support means (13) for mounting the container (1) on supporting surfaces (14), wherein the load platform (6) and the skip-type containers (1) are so configured that the skip-type containers (1) can be mounted with their support means (13) on supporting surfaces (14) arranged on the upper sides and/or on the insides of the lateral boundary walls (5) of the load platform (6), whereupon they enter at least partly into the space between these boundary walls (5).

19. A transport system according to Claim 18, **characterised in that**, in particular in the vicinity of their support means (13), the skip-type containers (1) have hook-type retaining means (18) which, when the container disposed on the supporting surfaces (14) is tipped by tipping of the load platform (6), engage in a form-locking manner around shaped elements (19) arranged in particular in the vicinity of the supporting surfaces (14) so as to prevent sliding and tipping over of the container (1) on the loading platform (6).

20. A transport system according to one of Claims 18 to 19, **characterised in that** the supporting surfaces (14) are arranged on the upper sides of the lateral boundary walls (5) and the support means (13) are configured so that, when bearing on the supporting surfaces (14), they engage around the upper edges of the lateral boundary walls to provide form-locking in a horizontal direction transversely to the longitudinal axis of the vehicle between the skip-type container (1) and the respective lateral boundary wall (5).

## Revendications

1. Véhicule de transport avec une plate-forme de chargement (6), apte à basculer par rapport au véhicule de base (2) et munie d'une surface de chargement (3), qui est délimitée au moins du côté frontal et sur les côtés longitudinaux par des parois (5) et qui est prévue pour le transport et le déchargement par basculement arrière de marchandises de détail non emballées ou de matières en vrac, et avec deux bras de levage pivotants (4), montés dans la zone des côtés longitudinaux du véhicule et comportant deux vérins d'actionnement (22) et destinés au chargement de bennes (1) sur la plate-forme de chargement (6) et au déchargement de bennes (1) depuis la plate-forme de chargement (6), **caractérisé en ce que** les deux bras de levage pivotants (4) sont montés de manière solidaire sur les côtés longitudinaux de la plate-forme de chargement (6), de telle sorte qu'ils basculent conjointement avec le basculement de la plate-forme de chargement (6), les vérins d'actionnement (22) des bras de levage pivotants (4) étant en appui sur la plate-forme de chargement (6), et le véhicule de transport est réalisé de telle sorte qu'un basculement d'une benne (1), montée sur la plate-forme de chargement (6), peut être effectué moyennant le basculement de la plate-forme de chargement (6) et moyennant un mouvement supplémentaire des deux bras de levage pivotants (4) tant par rapport au véhicule de base que par rapport à la plate-forme de chargement, afin de permettre à la benne (1) de basculer selon un angle de basculement qui est supérieur à l'angle de basculement de la plate-forme de chargement (6), et le véhicule comportant un vérin hydraulique à double effet pour le basculement de la plate-forme de chargement (6).

2. Véhicule de transport selon la revendication 1, **caractérisé en ce que** les bras de levage pivotants (4) sont montés en dehors de la zone entourée par les parois (5).

3. Véhicule de transport selon l'une quelconque des revendications précédentes, **caractérisé en ce que** la plate-forme de chargement (6) est montée de manière fixe sur le véhicule de base (2).

4. Véhicule de transport selon la revendication 1 ou 2, **caractérisé en ce que** la plate-forme de chargement (6) est réalisée sous la forme d'une structure amovible, de telle sorte que celle-ci peut être fixée de manière démontable sur le véhicule de base (2) au moyen de fixations amovibles rapides.

5. Véhicule de transport selon la revendication 4, **caractérisé en ce que** le véhicule de transport est un véhicule à benne mobile (7) avec un bras de chargement (8) central ou avec une commande par câble, et la plate-forme de chargement (6) est réalisée sous forme de plate-forme pour benne mobile (9) et peut être tirée sur le véhicule de base (2) au moyen du bras de chargement (8) central ou au moyen de la commande par câble.

6. Véhicule de transport selon l'une quelconque des revendications précédentes, **caractérisé en ce que** la surface de chargement (3) est délimitée ou peut être délimitée sur son côté arrière par une paroi arrière (11) basculante et/ou oscillante.

7. Véhicule de transport selon la revendication 6, **caractérisé en ce que** la paroi arrière (11) est munie d'un ou de plusieurs crochets de basculement (12), afin de permettre un basculement d'une benne (1) moyennant l'accrochage de boulons de celle-ci dans les crochets de basculement (12).

8. Véhicule de transport selon l'une quelconque des revendications précédentes, **caractérisé en ce que** la surface de chargement (3) est une surface sensiblement plane.

9. Véhicule de transport selon l'une quelconque des revendications précédentes, **caractérisé en ce que** la surface de chargement (3) comporte des éléments profilés fixes et/ou réglables, en particulier des butées, pour fixer et/ou centrer par conjugaison de forme dans la direction horizontale une benne (1) sur la surface de chargement (3), en particulier pour immobiliser la benne (1) contre tout déplacement dans le sens de déplacement du véhicule en cas de freinage.

10. Véhicule de transport selon la revendication 9, **caractérisé en ce que** la surface de chargement (3) est montée en profondeur pour centrer et/ou pour empêcher en cours de déplacement du véhicule un glissement latéral d'une benne (1), montée sur la surface de chargement (3).

11. Véhicule de transport selon l'une quelconque des revendications précédentes, **caractérisé en ce que** des ridelles (16), enfichées ou pouvant être enfichées dans la surface de chargement (3), sont présentes pour le guidage latéral d'une benne (1) montée sur la surface de chargement (3).

12. Véhicule de transport selon l'une quelconque des revendications précédentes, **caractérisé en ce que** les parois latérales (5) comportent des éléments profilés fixes et/ou réglables, en particulier des taquets, pour fixer et/ou centrer par conjugaison de forme dans la direction horizontale et/ou verticale une benne (1) sur la plate-forme de chargement (6), en particulier pour immobiliser la benne (1) contre tout mouvement dans le sens de déplacement du véhicule pendant le transport et/ou pour immobiliser la benne (1) pendant le basculement.

13. Véhicule de transport selon l'une quelconque des revendications précédentes, **caractérisé en ce que** la plate-forme de chargement (6) comporte des moyens de fixation pour des câbles de basculement (21), lesquels sont disposés en particulier sur les faces intérieures des parois (5).

14. Véhicule de transport selon l'une quelconque des revendications précédentes, **caractérisé en ce que** celui-ci est une remorque de transport routier ou un véhicule routier actionné par un moteur, en particulier un camion.

15. Ensemble de plate-forme de chargement pour former un véhicule de transport selon l'une quelconque des revendications précédentes moyennant la combinaison avec un véhicule de base (2), comportant :
a) une plate-forme de chargement (6) avec une surface de chargement (3) sensiblement fermée, sachant qu'au moins la face frontale et les côtés longitudinaux de la surface de chargement (3) sont entièrement délimités par des parois (5) sensiblement verticales, et
b) deux bras de levage pivotants (4), qui sont montés sur les côtés longitudinaux de la plate-forme de chargement (6) et sont montés de manière solidaire avec la plate-forme de chargement (6), de telle sorte qu'ils basculent conjointement avec le basculement de la plate-forme de chargement (6), les bras de levage pivotants (4) comportant des vérins d'actionnement (22), qui prennent appui sur la plate-forme de chargement (6) et par lesquels les bras de levage pivotants (4) sont mobiles par rapport à la plate-forme de chargement (6).

16. Ensemble de plate-forme de chargement selon la revendication 15, **caractérisée en ce que** celle-ci est réalisée sous la forme d'une structure amovible, afin de permettre une fixation temporaire sur un véhicule de base (2) pour des structures amovibles.

17. Ensemble de plate-forme de chargement selon l'une quelconque des revendications 15 à 16, **caractérisée en ce que** celle-ci est réalisée sous forme de plate-forme pour benne mobile (9), en particulier pour des bennes mobiles à crochets, afin de permettre une fixation temporaire sur un véhicule à benne mobile (7).

18. Système de transport comportant un véhicule de transport selon l'une quelconque des revendications 1 à 14 ou un ensemble de plate-forme de chargement selon l'une quelconque des revendications 15 à 17 et une ou plusieurs bennes (1), dont les parois latérales (5) comportent, sur leurs faces extérieures, des moyens d'appui (13) pour poser la benne (1) sur des surfaces d'appui (14), la plate-forme de chargement (6) et la benne (1) étant réalisées de telle sorte que les bennes (1) avec leurs moyens d'appui (13) peuvent être posées sur des surfaces d'appui (14), disposées sur les faces supérieures et/ou sur les faces intérieures des parois latérales (5) de la plate-forme de chargement (6), et dans ce cas s'engagent au moins en partie dans l'espace entre ces parois latérales (5).

19. Système de transport selon la revendication 18, **caractérisé en ce que** les bennes (1), en particulier dans la zone de leurs moyens d'appui (13), comportent des moyens de fixation (18) en forme de crochets qui, lors du basculement de la benne montée sur les surfaces d'appui (14) moyennant le basculement de la plate-forme de chargement (6), enserrent par conjugaison de forme des éléments profilés (19) des parois latérales (5), disposés en particulier dans la zone des surfaces d'appui (14), afin d'immobiliser la benne (1) sur la plate-forme de chargement (6) contre tout glissement ou basculement.

20. Système de transport selon l'une quelconque des revendications 18 à 19, **caractérisé en ce que** les surfaces d'appui (14) sont disposées sur les faces supérieures des parois latérales (5) et les moyens d'appui (13) sont réalisés de telle sorte que, lorsqu'ils sont posés sur les surfaces d'appui (14), ils enserrent les bords supérieurs des parois latérales (5) afin de réaliser un assemblage par conjugaison de forme dans la direction horizontale transversalement à l'axe longitudinal du véhicule entre la benne (1) et la paroi latérale (5) correspondante.
